# DEMANDE DE BREVET EUROPEEN

(11) **EP 1 050 740 A2**
(43) Date de publication de la demande: **08.11.2000**
(21) Numéro de dépôt: 00810053.9
(22) Date de dépôt: 21.01.2000
(51) Int. Cl.: G01B 7/34, G12B 21/02

(54) **Procédé de fabrication intégrée de pointes montées sur un support**

(30) Priorité: 17.02.1999 CH 30199
(71) Demandeur: CSEM Centre Suisse d'Electronique et de Microtechnique SA, 2007 Neuchâtel (CH)
(72) Inventeur: Niedermann, Philipp, 2034 Peseux (FR)
(74) Mandataire: Brulliard, Joel

(57) **Abrégé**

Ce procédé consiste à:
- former une pointe (4) dans un premier substrat (1), ladite pointe s'étendant vers l'intérieur dudit premier substrat;
- recouvrir ladite pointe d'au moins une couche d'adhésion (5) puis d'une couche de soudure (6);
- réaliser un profil (9) dans un second substrat (7);
- souder le premier et le second substrat de telle sorte que ledit profil soit positionné en regard de ladite pointe et desdites couches d'adhésion et de soudure;
- éliminer ledit premier substrat de manière à libérer la pointe; et
- découper ledit second substrat selon les dimensions de ladite embase.

Grâce à ce procédé, la manipulation et le montage de pointes sur des équipements de mesure en sont grandement facilités

## Description

La présente invention est relative à un procédé de fabrication de pointes montées sur une embase, propre à en permettre la manipulation aisée et le montage simplifié sur un équipement de mesure. L'invention concerne également le produit "pointe-embase" résultant de la mise en oeuvre du procédé.

L'utilisation de pointes miniatures, dures et extrêmement fines a déjà été proposée pour la détermination précise de profils de surface. Ces pointes peuvent être déplacées, par un mécanisme adéquat, selon trois directions orthogonales afin d'explorer la surface d'un échantillon et permettre d'en extraire une topographie précise (dans le domaine sub-micronique) par la mesure du déplacement, par exemple en profondeur, de la pointe en réponse à son déplacement latéral et/ou longitudinal. Pour atteindre les précisions requises, ces pointes doivent avoir des dimensions très faibles, typiquement 30 µm de hauteur, mais, également, très précises. Plusieurs procédés de fabrication de telles pointes ont déjà été publiés, notamment dans les demandes de brevet de la demanderesse EP 0 766 060 et EP 0 882 944. De telles pointes peuvent être également avantageusement utilisées dans des applications autres que la profilométrie, telles que la microscopie à force atomique, ou plus généralement la microscopie à balayage ("scanning microscopy"), la caractérisation de surface ("scratch testing"), etc. Bien que les techniques modernes de fabrication permettent la production par lots ("batch processing") de pointes de qualité et de dimensions rigoureuses, la manipulation de ces dernières reste un problème majeur, du fait de leurs très faibles dimensions et de leur relative fragilité. Dépendant de l'application envisagée, ces pointes doivent pouvoir être montées sur un levier flexible (application de type AFM ou "Atomic Force Microscope"), sur une tête de mesure (application de type "scratch testing") ou sur tout type de support adapté à l'instrument en question. Bien que l'on ait déjà proposé, par exemple dans le brevet américain USP 5, 221, 415, de réaliser simultanément une pointe pyramidale en un matériau dur et son levier pour des applications de type AFM, la fabrication de pointes pour un usage général facilitant leur manipulation et leur montage sur tout type d'instrument fait encore défaut.

Aussi, un objet de la présente invention est un procédé de réalisation d'une pointe sur un support, ou embase, propre à permettre une manipulation et un montage simples et aisés de l'ensemble sur tout type d'équipement.

Un autre objet de l'invention est un procédé de fabrication permettant la fabrication simultanée d'une pluralité de pointes montées sur leur embase.

Encore un autre objet de l'invention est le produit pointe-embase résultant de la mise en oeuvre dudit procédé.

Selon une caractéristique de l'invention, le procédé de réalisation d'une pointe sur une embase comprend les étapes de:
- former une pointe dans un premier substrat, ladite pointe s'étendant vers l'intérieur dudit premier substrat;
- recouvrir ladite pointe d'au moins une couche d'adhésion puis d'une couche de soudure;
- réaliser un profil dans un second substrat;
- souder le premier et le second substrat de telle sorte que ledit profil soit positionné en regard de ladite pointe et desdites couches d'adhésion et de soudure;
- éliminer ledit premier substrat de manière à libérer la pointe; et
- découper ledit second substrat selon les dimensions de ladite embase.

Selon une autre caractéristique, ledit premier substrat est en silicium.

Selon encore une autre caractéristique, ledit second substrat est en Pyrex.

Selon encore une autre caractéristique, ladite pointe est réalisée en diamant.

Il résulte de ces caractéristiques que le produit obtenu est une pointe en un matériau dur montée sur une embase dont les dimensions peuvent être choisies librement pour s'adapter au mieux à l'application envisagée. Le procédé de l'invention permet la fabrication simultanée d'une pluralité de pointes-embases dont les caractéristiques sont identiques.

D'autres objets, caractéristiques et avantages de la présente invention apparaîtront à la lecture de la description suivante d'un exemple de réalisation, ladite description étant faite à titre purement illustratif et en relation avec les dessins joints dans lesquels:
- les figures 1.a à 1.d illustrent la fabrication de pointes sur un premier substrat:
- les figures 2.a et 2.b montrent deux exemples de masques pouvant servir à la fabrication des pointes de la figure 1;
- la figure 3 montre une structure dans un second substrat destinée à former l'embase;
- les figures 4.a à 4.c illustrent l'assemblage des deux substrats et la réalisation de pointes sur leur embase; et
- les figures 5.a et 5.b montrent deux vues de l'embase.

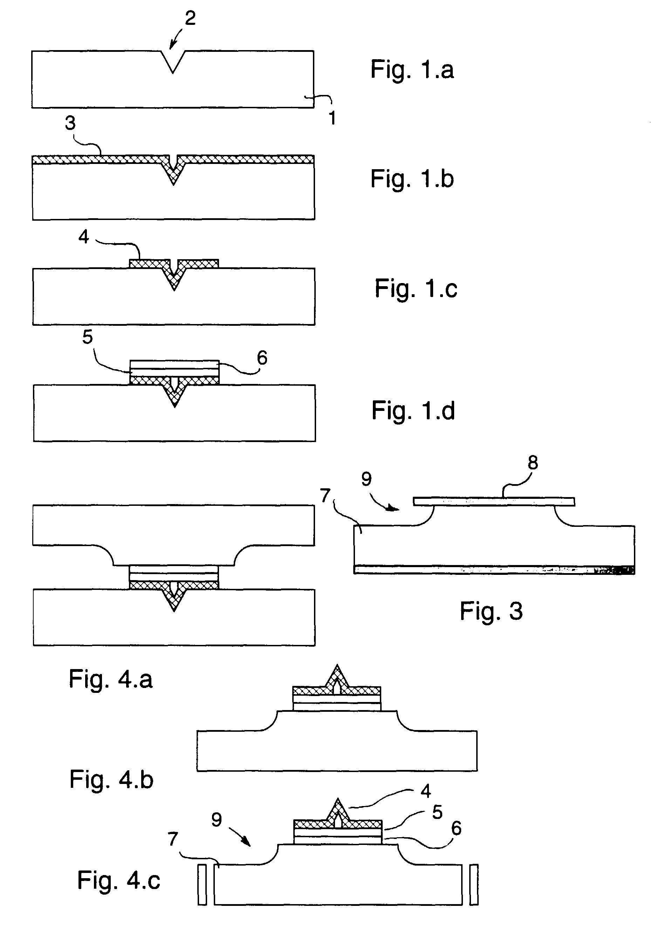

Les figures 1.a à 1.d illustrent la fabrication des pointes en diamant sur un substrat de silicium. Bien qu'une seule pointe soit représentée, on comprendra aisément que le procédé permet de fabriquer une pluralité, en fait plusieurs milliers, de pointes simultanément sur une seule plaquette de silicium. La figure 1.a montre dans un substrat de silicium 1, un moule 2 destiné à la réalisation ultérieure de la pointe. Ce moule 2, de forme pyramidale, a été obtenu par attaque anisotrope [111] humide, par exemple à l'aide d'une solution de KOH, de la surface du substrat préalablement oxydée (Si02) et structurée, comme indiqué dans la demande de brevet précitée EP 0 882 944.

La figure 2 montre deux exemples de masques pouvant servir pour la structuration de la couche d'oxyde (non représentée). A la figure 2.a est représentée une forme carrée, qui définira la base de la pyramide, alors qu'à la figure 2.b est représentée une forme octogonale, qui lui est préférée. La surface du substrat 1 portant le moule 2 est ensuite recouverte d'une couche de diamant 3; procédé consistant, ainsi qu'indiqué dans la demande de brevet européen précitée, à déposer une couche de nucléation puis, à faire croître, par CVD (Chemical Vapour Deposition) dans une atmosphère carbonnée, cette couche de nucléation jusqu'à obtenir une couche 3 d'une épaisseur de 100 nm à 5 µm. La couche de diamant est ensuite structurée selon la forme 4, représentée à la figure 1.c. Pour ce faire, on réalise, par photolithographie et CVD, une couche de Si02 (non représentée) destinée à recouvrir la forme 4 puis, la couche de diamant en dehors de la forme 4 est éliminée dans un plasma d'oxygène par RIE (Reactive Ion Etching) et enfin, la couche de Si02 est éliminée dans une solution BHF. L'étape suivante, représentée à la figure 1.d, consiste à déposer sur la forme 4 une première couche 5 d'oxyde de silicium (SiO2) puis une deuxième couche de Si Nx; cette dernière étant un composé riche en silicium. Le dépôt de ces couches 5 et 6 peut être fait par CVD et leur structuration réalisée par RIE. Le masque utilisé pour la structuration des couches 5 et 6 est le même que celui ayant servi pour structurer la couche de diamant 4.

Il convient de noter que le mode de réalisation de pointes en diamant de forme pyramidale n'est donné qu'à titre d'exemple et parce qu'il se prête bien à différents types d'application. Le diamant, en effet, outre ses propriétés connues de dureté, peut facilement être dopé pour le rendre conducteur. Toutefois, on comprendra que le procédé de l'invention est également applicable à d'autres modes de réalisation de pointes, que celles-ci soient en des matériaux différents, de formes différentes ou encore obtenues de manière différentes.

La figure 3 montre un substrat en Pyrex ou en un verre Borosylicate. Ce substrat a été recouvert d'un dépôt de polysilicium, lequel a été gravé dans un plasma pour définir le masque d'attaque. L'attaque du Pyrex est effectuée dans une solution BHF qui, non seulement attaque le Pyrex situé en-dessous de la couche de polysilicium mais encore, réalise une sous-attaque définissant le profil 9. L'existence d'un tel profil est importante comme on le verra ci-après pour permettre un dégagement maximum de la pointe en diamant. La profondeur de la sous-attaque dépend du temps d'action de la solution BHF qui peut être déterminé empiriquement. Pour protéger la face inférieure du substrat en Pyrex 7, celle-ci est également recouverte de polysilicium, lequel est éliminé, ultérieurement et simultanément avec la couche 8, par une solution de KOH.

Les figures 4.a à 4.c montrent la réunion des deux substrats de silicium et de Pyrex pour former les pointes montées sur leur embase. Le substrat 7 est positionné précisément sur le substrat 1 de telle sorte que la partie profilée 9 du substrat 7 soit en regard de la couche 6 du substrat 1. Les deux substrats sont ensuite soudés, par leurs parties externes, par soudure anodique (température de 500°C sous une tension d'environ 1000 volts).

La soudure anodique ne peut pas être réalisée directement entre la couche de diamant et le substrat en Pyrex. Par contre, la soudure anodique peut parfaitement être effectuée entre la couche de SiNx et le substrat en Pyrex. Cette couche de SiNx, toutefois, n'adhère pas à la couche de diamant. C'est la raison pour laquelle il est nécessaire de déposer, sur la couche de diamant, une première couche d'adhésion en Si02, puis une deuxième couche (SiNx) qui, elle, permet la soudure anodique avec le substrat en Pyrex.

La prochaine étape (figure 4.b), consiste à éliminer le substrat de silicium; ce qui est réalisé à l'aide d'une solution de TMAH (Hydroxyde de Tetra-Méthyl d'Ammonium). La pointe en diamant se trouve alors dégagée et fixée sur son support 7. L'opération finale consiste alors en une opération de sciage (figure 4.c) du substrat de Pyrex pour séparer les pointes individuelles et leur embase. Afin de protéger les pointes pendant l'opération de sciage, il est souhaitable de recouvrir la face supérieure (celle présentant les pointes), par exemple, à l'aide d'une résine épaisse (photorésist) qui est ensuite dissoute (acétone puis, isopropanol) à l'issue de l'opération de sciage.

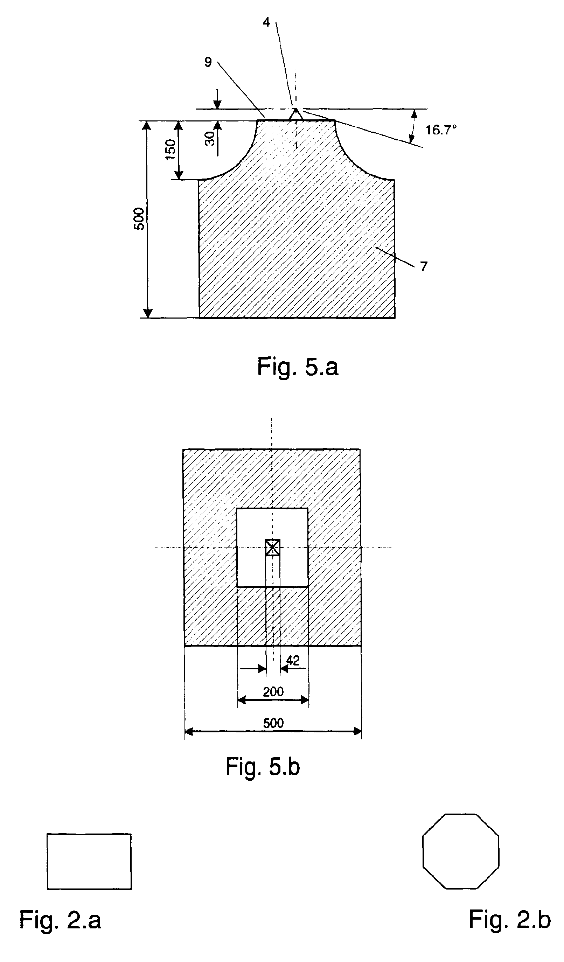

La figure 5 montre une vue de côté d'une pointe 10 montée sur son embase 11. La pointe 10 a une hauteur typique de 30 µm et une largeur à la base d'environ 40 µm. L'embase 11 a une hauteur de 500 µm, son profil 9 offre un dégagement sur une hauteur de 150 µm qui amène la dimension sous la pointe 10 à 200 µm. L'angle maximum dont peut être décalé l'ensemble pointe-embase par rapport à l'échantillon à examiner est de 16,7°, alors qu'il est de 12° dans la diagonale. L'embase 11, ayant des dimensions de 0.5x0.5x0.5 mm³, est parfaitement manipulable même avec des équipements de placement (pick and place) automatiques.

II est clair que diverses variantes, autres que celles décrites, peuvent être envisagées pour la mise en oeuvre du procédé selon l'invention.

## Revendications

1. Procédé de réalisation d'une pointe sur une embase, caractérisé en ce qu'il comprend les étapes de:
- former une pointe (4) dans un premier substrat (1), ladite pointe s'étendant vers l'intérieur dudit premier substrat;
- recouvrir ladite pointe d'au moins une couche d'adhésion (5) puis d'une couche de soudure (6);
- réaliser un profil (9) dans un second substrat (7);
- souder le premier et le second substrat de telle sorte que ledit profil soit positionné en regard de ladite pointe et desdites couches d'adhésion et de soudure;
- éliminer ledit premier substrat de manière à libérer la pointe; et
- découper ledit second substrat selon les dimensions de ladite embase.

2. Procédé selon la revendication 1, caractérisé en ce que ledit premier substrat est en silicium.

3. Procédé selon la revendication 1 ou 2, caractérisé en ce que ladite pointe est réalisée en diamant.

4. Procédé selon la revendication 3, caractérisé en ce que le diamant est déposé dans un moule préalablement réalisé dans ledit premier substrat par photolithographie.

5. Procédé selon la revendication 4, caractérisé en ce que le dépôt de diamant est réalisé par CVD dans une atmosphère carbonnée.

6. Procédé selon l'une des revendications précédentes, caractérisé en ce que ladite couche d'adhésion (5) est en oxyde de silicium (SiO2).

7. Procédé selon l'une des revendications précédentes, caractérisé en ce que ladite couche de soudure (6) est en un composé de SiNx riche en silicium.

8. Procédé selon la revendication 1, caractérisé en ce que ledit second substrat (7) est en Pyrex.

9. Procédé selon la revendication 1, caractérisé en ce que ledit second substrat (7) est en un verre borosylicate.

10. Procédé selon la revendication 1, caractérisé en ce que ladite soudure est une soudure anodique.

11. Pointe montée sur une embase et réalisée au moyen d'un procédé selon l'une quelconque des revendications précédentes.
